# EUROPEAN PATENT SPECIFICATION

(11) **EP 3 756 978 B1**
(45) Date of publication and mention of the grant of the patent: **15.10.2025**
(21) Application number: 20182564.3
(22) Date of filing: 26.06.2020
(51) Int. Cl.: B62D 13/00

(54) **IMPROVED SYSTEM FOR OPTIMIZING STEERING OF TRAILERS**
VERBESSERTES SYSTEM ZUR OPTIMIERUNG DER LENKUNG VON ANHÄNGERN
SYSTÈME AMÉLIORÉ POUR OPTIMISER LE PILOTAGE DES REMORQUES

(30) Priority: 28.06.2019 NO 20190821
(43) Date of publication of application: 30.12.2020
(73) Proprietor: T. N. Vangs Mek. Verksted AS, 7670 Inderøy (NO)
(72) Inventor: Vang, Terje, 7670 Inderøy (NO)
(74) Representative: Acapo AS

(56) References cited:
- EP-A1- 1 852 284
- WO-A1-2011/069199
- DE-A1- 10 317 472
- DE-A1- 102012 023 775
- DE-A1- 3 525 027

## Description

The present invention relates to an improved system and a method for optimizing steering of trailers preferably trailers comprising three or more rear wheel axles, according to the preamble of the independent claims.

### Background

Longer vehicles normally need more space to turn around a corner or make a U-turn than shorter vehicles, and turning and steering trailers comprising three or more rear axles may be challenging. It is not uncommon that longer vehicles must go back and forth several times in order to make the turn on the space available. Such manoeuvring is time consuming, but also demanding to the driver and the risk of hitting the circumstances is increasing.

Another problem is when longer vehicles should do a turn around a physical hindrance and the space around the hindrance is limited, as the trailer may hit the hindrance. This is a well known problem with roundabouts having a curb or the similar in the centre, as the road width of the roundabout is limited, and the vehicle is not able to do the turn on the space available without cutting the turn and thereby the wheels of the trailer will run over the inner radius of the roundabout. In cases where the roundabout has a defined curb, the wheels may rub against the curb causing damages to the wheels and/or the curb.

By "trailer" it is, in this application, meant full trailers, drawbar trailers, centre axle trailers, semitrailers and the similar. By "vehicle" it is meant any vehicle used to pull a trailer, such as truck or truck tractor, but should also include self-propelled and not self-propelled vehicles. In order to ease the understanding of the invention, we will use the expression "semitrailer" when referring to a vehicle with trailer in this application and claims, regardless of whether a truck tractor actually is the vehicle, and what type of trailer is being used.

When turning a semitrailer the driver must consider both the wall-to-wall and/or curb-to-curb radius which is the distance between buildings and the distance wherein the wheels of the semitrailer may run, respectively. If the driver should turn around a corner, he/she must also consider the inner radius, and the difference between the inner radius and the outer radius (being the wall-to-wall or curb-to-curb radius) which is the area the driver has at disposal for turning the semitrailer.

Whether the semitrailer is able to do the turn without reversing, or turn at all, depends on the turning radius of the semitrailer. The turning radius of a semitrailer is the radius of the smallest circular turn, U-turn, that the semitrailer is capable of making. The maximum turning radius is the outer radius which the semitrailer does not cross when making the turning radius, and the minimum turning radius is the inner radius not influence by the semitrailer while performing the turn. The distance between the minimum and maximum turning radius is called the swepth path, and express how much space the semitrailer needs to do a turn. Most vehicles using European roads have to be able to turn within a space between inner radius 5,3 m and outer radius 12,5 m.

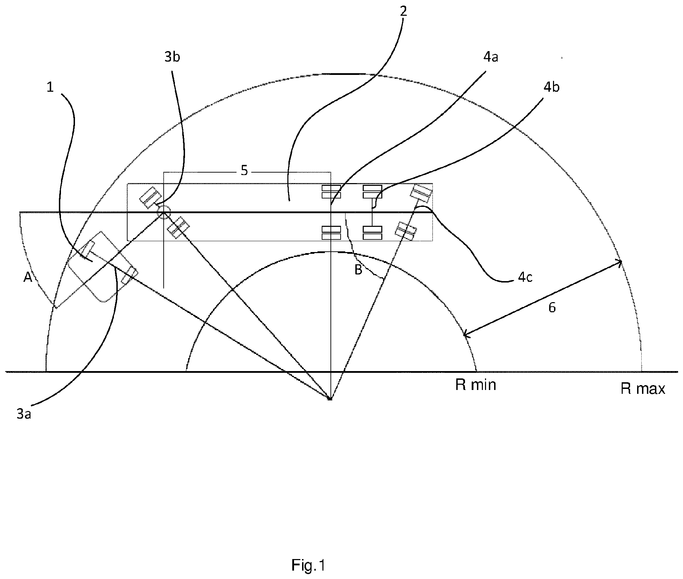

Both the minimum and maximum turning radius, and thus the swepth path, depends on the wheelbase being the distance between the steering axle and the weight centre point of the non-steered axles of a semitrailer. By moving the weight centre point, the turning radius and swepth path is changed if all other parameters are unchanged. In the case of a tri-axle semitrailer, having two rigid axles and forced/controlled steering on the rearmost axle, the wheelbase would be the distance between the rear wheels of the tractor and a point midway between the two rear rigid axles, see enclosed Figure 1. The weight centre-point is also known as the theoretical turning point.

By "rearmost" it is herein meant the wheel axle on the trailer, being farthest away from a vehicle being connected to the trailer.

There are some known systems to displace the theoretical turning point and thus increase or reduce the wheelbase of a semitrailer, such as OptiTurn^{™} from Wabco which automatically lift the rearmost axle when load conditions allows it, and thereby reduces the wheelbase. The axle must be provided with an axle suspension system / axle load distribution system or chassis control system such as ECAS, eTASC or the similar. Even if the system reduces tire wear and rolling resistance on the lifted axles, it increases the tire wear on the other wheels, and especially during curves when the wheels of the rear axles become angular to the movement. Another disadvantage is that when the rear axle is lifted, the load transfer to the tractor/truck is reduced, and the traction is reduced. This may interfere with the road grip and the driving abilities of the semitrailer.

Another known solution to reduce the wheelbase is to use controlled or forced steering of one, two or all of the rear wheel axles of the trailer, such as known from TRIDEC, wherein the angle between the vehicle and the trailer controls the turning angle of the rear wheel axle. By having a controlled steered axle, the trailer will follow the truck more accurate, and the space needed for a turn is reduced. These systems are however, expensive, and add weight which reduces the payload. Further the system demands high maintenance, and limits the design possibilities of a trailer. Such systems are also known as positive steering axles, for instance from BPW.

In addition to the above said disadvantages, semitrailers using any of these systems demands a large swept path in order to avoid hitting physical hindrances in the centre of a turn. WO 2011/069199 A1 shows in particular a system and a method for optimizing steering of trailers comprising three or more rear wheel axles and being pulled by a vehicle, wherein- one or more of the rearmost wheel axles are controlled steered axles.

The main object of the present invention is thus to provide a system for optimizing steering of semitrailers, such that the semitrailer may drive steeper curves without reversing, and that the required "swepth path" when doing a turn around a physical hindrance should be reduced.

Another object of the invention is that the system should affect the the weight distribution between the trailer and truck minimally, and avoid interference with the driving ability of the truck such as the ability to climb hills, road grip on slippery road and even the steering.

### The invention

The objects are met by a system and a method according to the independent enclosed claims. Further advantageous features are stated in the corresponding dependent claims.

The invention relates to a system for optimizing steering of trailers comprising three or more rear wheel axles and being pulled by a vehicle. One or more of the rearmost wheel axles are controlled steered axles, and one or more of the rear wheel axles subsequently following the controlled steered axles in the forward direction, has a system for axle suspension and control of the weight per axle, wherein the total weight on the axles may be redistributed. The redistribution of the weight on the axles must of course depend on the current load situation.

By "controlled steered axles", it is herein meant that the turning angle of the wheel axle(s) is controlled for instance by the angle between the vehicle and the trailer, by detection of the curve and curve shape and possibly the speed of the vehicle, by manual input, or a combination of these.

By "one or more" or "at least one" of the wheel axles "have a system for axle suspension and control of the weight per axle" it is herein meant that the weight of at least one of the axles may be reduced or the axle as such may be lifted, and the weight will be transferred to the other axles according to known systems as described above. In an example not being part of the invention, the axles being controlled steered axles also have a system for axle suspension. According to the invention, all rear axles have a system for axle suspension. A trailer according to the invention only comprises one system for axle suspension, and thus all axles have the same system.

By "axle subsequently following in the forward direction" it is herein meant the axle in front of, towards the vehicle. The axle subsequently following the rearmost axle in the forward direction, would be the second rearmost axle etc. If the system comprises three controlled steered axles, then the three rearmost axles would be controlled steered axles, and the axle subsequently following in the forward direction, that is the fourth axle counting from behind the trailer, would have a system for axle suspension.

According to the invention, the system further comprises a command system for detecting speed, steer angle between vehicle and trailer, and axles loads, and controlling the steered axles and the suspended axles. The angle of the wheels on the steered axle to the longitudinal direction of the trailer, and the weight per axle will be adjusted according to the output of the command system. When the system comprises such a command system, the displacement of the theoretical turning point, and thus the reduction of turning radius and/or swept path may be fully automatic.

In another embodiment of the invention, the system further comprises devices for manual input by a driver. A device for manual input by a driver may be in addition to or instead of the command system described above. By having a device for manual input the driver may initiate the the displacement of the weight centre point, and thus the improvement of turning radius and/or swept path himself/herself, or even overrule the automatic system. This may, for instance also be advantageous in order to improve road grip on slippery road which is a well known method to skilled persons.

In yet an alternative embodiment, the system may further comprise a delayer, which will delay the steering of the wheels and adjustment of the weight a predetermined time, or until a predetermined limit is reached, for instance until the speed of the vehicle is below 30 km/h.

In a preferred embodiment of the system, both the wheel axle(s) being controlled steered axle and the axle(s) having a system for axle suspension should be rear of the theoretical turning point of the trailer. By amending a rigid axle to a controlled steered axle, and/or by suspending or reducing pressure on another axle behind the theoretical turning point of a trailer, the turning point will be displaced forward towards the vehicle, and the wheelbase of the trailer will be reduced. As mentioned above, when the wheelbase is reduced, the turning radius is improved, and swepth path reduced.

In a more preferred embodiment, the at least one axle having controlled steering is the rearmost axle, and the at least one axle having a system for axle suspension and control of the weight is the second rearmost axle. When the axle having a system for axle suspension is the second rearmost axle, the load will be redistributed to the adjacent axels, and not interfere with the load on the vehicle and thus not influence the traction, road grip and/or other driving abilities of the semitrailer.

An advantage of a system according to the present invention is that the turning radius/swepth path of the semitrailer is reduced, and thereby the semitrailer may ride on narrower roads or roads with steeper curves. Further, when the semitrailer is driving through roundabouts it may avoid hitting a physical hindrance in the middle of the roundabout.

Another advantage is that the length of trailers able to drive on roads depend among others on their turning radius. By reducing the turning radius or swepth path physically longer trailers might be able to drive on existing roads, and thus more loads may be transported by fewer vehicles. This will be advantageous both economically and environmentally.

The invention further relates to a method for optimizing steering of semitrailers having three or more rear wheel axles and being pulled by a vehicle. The semitrailer has a system as described above, and the method comprises the following steps:
- detecting parameters of speed, axle load and curve shape of a curve in question,
- controlling the steering of one or more of the rear wheel axles having controlled steered axles, and
- redistributing the weight on the wheel axles having a system for axle suspension, according to the parameters being detected.

In the method described above, the parameters are detected manually by the driver, automatically by a command system, or a combination of these.

In a preferred embodiment, the controlling of the steering and redistribution of the weight is performed automatically based on the detected parameters.

As described above, the control system and method according to the present invention combines the system for controlled steered axles at least at one wheel axle and a system for axle suspensions at at least one of the wheel axles. The controlled steered axle(s) is the rearmost axle and the system for axle suspension is at the axle subsequently following the rearmost axle. When the trailer comes into a curve, the rearmost axle will turn according to the angle between trailer and vehicle/truck, and the weight of an axle in front of it, being the subsequently following axle in the forward direction, or the middle axle when the trailer has three axles, will be reduced. In difference from the known system for axle suspensions, in the system according to the present invention the rearmost axle is a controlled steered axle and the system does not reduce the weight of the rearmost axle, but on subsequently following axle in the forward direction. This will move the theoretical turning point forward, reduce the wheelbase and thereby reduce the swepth path and improve the manoeuvrability of the vehicle and trailer.

When the system for suspension of rear axle according to prior art reduces the weight of, or lifts, the rear axle, the swepth path of the trailer will be reduced by up to 0,5 m. When using the system according to the present invention, the theoretical turning point will be transferred forward and the swepth path will be reduced accordingly. The size of the improvement will depend on the size of the trailer and the distance between the wheel axles, but it will be substantially larger than the said improvement of prior art (0,5 m) given the same semitrailer.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

The following description of an exemplary embodiment refers to the figures, and the following detailed description is not meant or intended to limit the invention. Instead, the scope of the invention is defined by the appended claims.

### Example

The invention will now be described with the help of the enclosed figures, showing the principles of a system according to the present invention. The different parts of the figure are not necessarily in scale to each other, as the figure is merely for illustrating the invention.

The invention is illustrated by
Figure 1 showing a semitrailer in a roundabout doing a 180 degree turn,
Figure 2 showing a semitrailer in a roundabout doing a 180 degree turn, the trailer has a friction steered axle, and
Figure 3 showing a semitrailer in a roundabout doing a 180 degree turn, the trailer has a system according to the present invention.

In Figure 1 it is shown a truck 1 with a trailer 2, the truck has two wheel axles 3a and 3b, and the trailer has three wheel axles 4a, 4b, 4c at the rear end of the trailer 2, wherein 4c is the rearmost axle. The outer turning circle of the vehicle is denoted Rmax. The inner circle denoted Rmin is indicating an inner circle not trespassed by the vehicle during the turn. The swepth path, being the area available to the semitrailer to turn, is marked by arrows and denoted by the number 6. The physical hindrance is often a protrusion such as a curb.

If all the axles of the semitrailer were rigid (not shown), the wheelbase 5 would be the distance from 3b to 4b, as 4b is the theoretical turning point (weight centre point) of the rear wheel axles. In the embodiment shown in Figure 1, the rear axle 4c is a controlled steered axle, whereby the angle B of the axle and the longitudinal direction of the trailer will be in a fixed relation to the angle A between the trailer and the truck. The theoretical turning point will thus be displaced towards the truck, and the wheelbase will be the distance between 3b and a midway between 4a and 4b. Further according to the invention, the wheel axles 4a and 4b, and possibly 4c, are provided with a system for axle suspension, and thus the weight may be transferred between them. When the weight of the axle 4b is reduced, or the axle 4b is lifted, the theoretical turning point will be further displaced towards the truck, and when suspended entirely, the wheelbase 5 will be the distance from 3b to 4a, as shown in the Figure. This will improve the turning radius and/or reduce the swepth path, and enable the semitrailer to drive through steeper curves. Further, if following the same outer curve, it will increase the inner radius, and the semitrailer may drive through roundabouts having a physical hindrance in the middle.

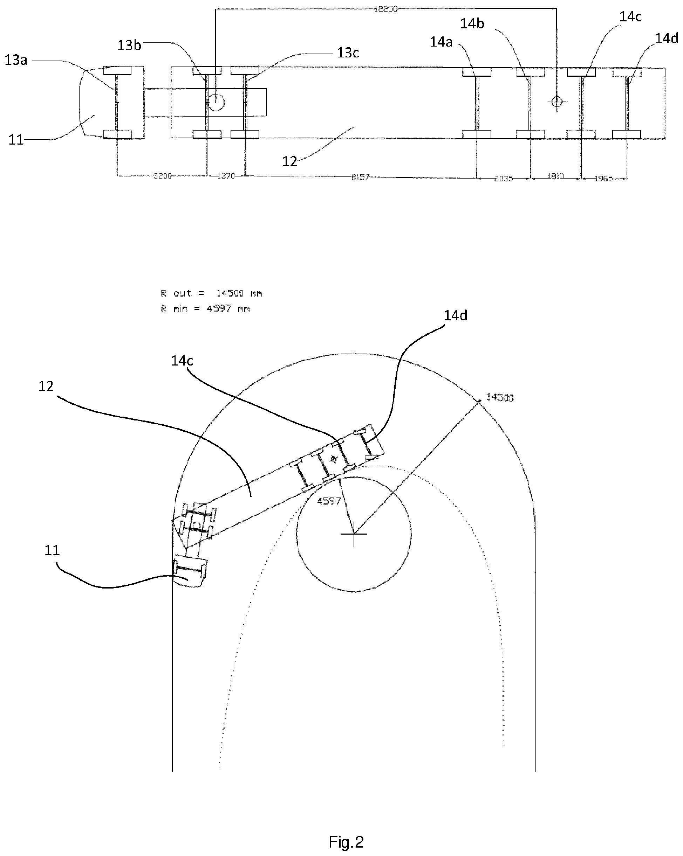

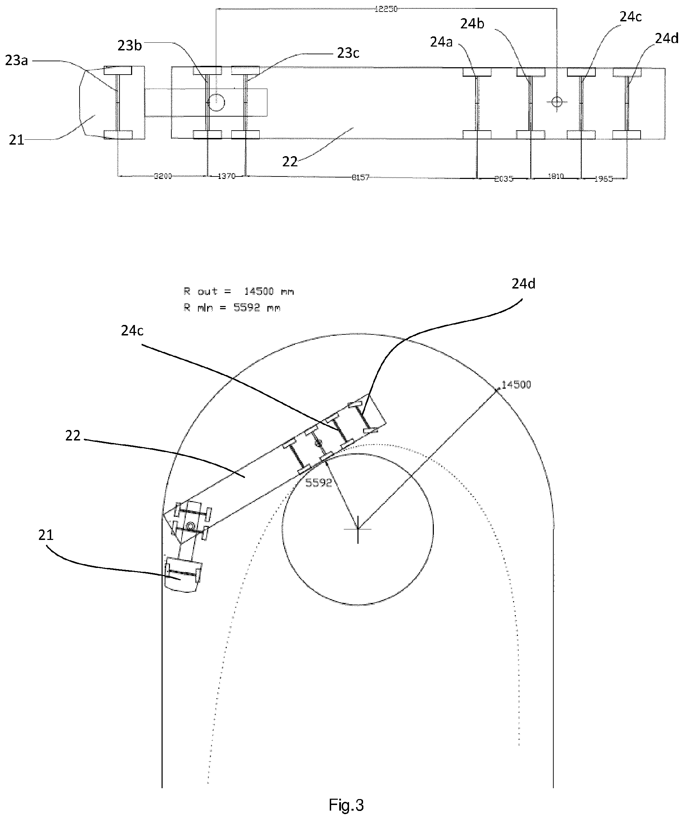

Figure 2 shows a semitrailer according to prior art in a roundabout doing a 180 degree turn, and Figure 3 shows a corresponding semitrailer with a system according to the present invention in the same roundabout doing a 180 degree turn.

In Figure 2 it is shown a truck 11 with a trailer 12, the truck has three wheel axles 13a, 13b and 13c, and the trailer has four axles 14a, 14b, 14c and 14d at the rear end of the trailer 12, wherein 14d is the rearmost axle. 14d is a friction steered axle well known in prior art, while axle 14a, 14b and 14c are rigid axles.

In Figure 3 it is shown a truck 21 with a trailer 22 according to the present invention, the truck has three wheel axles 23a, 23b and 23c, and the trailer has four axles 24a, 24b, 24c and 24d at the rear end of the trailer 22, wherein 24d is the rearmost axle. The rearmost axle 24d is a controlled steered axles well known in prior art, whereby an angle of the axle and a longitudinal direction of the trailer will be in a fixed relation to an angle between the trailer and the truck. The rear axles 24a, 24b and 24c are provided with a system for axle suspension, and in the example given in Figure 3, the weight of 24c is reduced or the axle is suspended from the ground. Axles 24a, 24b and 24c are rigid.

The roundabout shown in both Figure 2 and 3 has a physical hindrance in the middle, with a radius Rin of 5 m. The outer radius Rout of the road encircling the physical hindrance, is 14,5 m. The swepth path, being the area available to the semitrailer to turn, is thus 9,5 m.

The semitrailer 11,12 shown in Figure 2 will have an maximum inner radius of ca 4,6 m, and thus the wheels of the trailer will hit the physical hindrance causing possible damage to both the trailer and the roundabout. The outer radius of the turn is 14,5 m, and thus the semitrailer can not drive through the roundabout without either driving outside of the road, which is normally not advisable or even possible, or hitting the physical hindrance of the roundabout.

A semitrailer 21, 22 with a system according to the present invention, shown in Figure 3, displaces the theoretical turning point towards the truck, and reduces thus the wheelbase, compared to the semitrailer shown in Figure 2. This results in a smaller swepth path having an inner radius of ca 5,6 m, while keeping the outer radius of the turn at 14,5 m, giving a good distance to the physical hindrance of the roundabout while performing the turn.

Corresponding advantages will of course also arise when doing turns having another degree, such as 90 or 120, or simply when driving around a corner of a building or another physical hindrance.

The example above is given to illustrate the invention and should not be used to interpret the following claims limiting. The scope of the invention is limited by the following claims. Modifications and amendments of the invention, being obvious to a person skilled of the art, should also be included in the scope of the invention.

## Claims

1. System for optimizing steering of trailers (2) comprising three or more rear wheel axles (4a, 4b, 4c) and being pulled by a vehicle (1), wherein
- one or more of the rearmost wheel axles (4a, 4b, 4c) are controlled steered axles,
- all the rear wheel axles (4a, 4b, 4c) have the same system for axle suspension and control of the weight per axle, wherein the total weight on the axles may be redistributed, and wherein the system further comprises a command system for detecting speed, steer angle between vehicle (1) and trailer (2), and axles loads, and controlling the steered axles and the suspended axles.

2. System according to claim 1, wherein the wheel axle(s) being controlled steered axle and the axle(s) having a system for axle suspension are rear of a theoretical turning point of the trailer.

3. System according to claim 1, wherein the system further comprises a device for manual input by a driver.

4. Method for optimizing steering of trailers (2) having three or more rear wheel axles (4a, 4b, 4c) and being pulled by a vehicle (1), wherein the trailer has a system according to any one of claims 1-3, by
- detecting parameters of speed, axle load and steer angle between vehicle (1) and trailer (2),
- controlling the steering of one or more of the rear wheel axles having controlled steered axles, and
- redistributing the weight on the wheel axles having a system for axle suspension, according to the parameters being detected,
- wherein the controlling of the steering and redistribution of the weight is performed automatically based on the detected parameters.

5. Method according to claim 4, wherein the parameters are detected automatically by a command system.

6. Method according to claim 4 or 5, wherein the parameters are detected manually by the driver.

## Patentansprüche

1. System zum Optimieren eines Lenkens von Anhängern (2), umfassend drei oder mehrere Hinterradachsen (4a, 4b, 4c), und die von einem Fahrzeug (1) gezogen werden, wobei - eine oder mehrere der hintersten Radachsen (4a, 4b, 4c) gesteuerte gelenkte Achsen sind, - alle Hinterradachsen (4a, 4b, 4c) das gleiche System zur Achsaufhängung und Steuerung des Gewichts pro Achse aufweisen, wobei das Gesamtgewicht auf den Achsen umverteilt werden kann, und wobei das System ferner ein Befehlssystem zum Erfassen einer Geschwindigkeit, des Lenkwinkels zwischen Fahrzeug (1) und Anhänger (2) und der Achslasten und zum Steuern der gelenkten Achsen und der aufgehängten Achsen umfasst.

2. System nach Anspruch 1, wobei die Radachse(n), die gesteuerte gelenkte Radachse(n) ist/sind, und die Achse(n), die ein System zur Achsaufhängung aufweist/aufweisen, hinter einem theoretischen Wendepunkt des Anhängers sind.

3. System nach Anspruch 1, wobei das System ferner eine Vorrichtung zur manuellen Eingabe durch einen Fahrer umfasst.

4. Verfahren zum Optimieren eines Lenkens von Anhängern (2), die drei oder mehrere Hinterradachsen (4a, 4b, 4c) aufweisen und die von einem Fahrzeug (1) gezogen werden, wobei der Anhänger ein System nach einem der Ansprüche 1-3 aufweist, durch - Erfassen von Parametern einer Geschwindigkeit, Achslast und eines des Lenkwinkels zwischen Fahrzeug (1) und Anhänger (2), - Steuern der Lenkung einer oder mehrerer der Hinterradachsen, die gesteuerte gelenkte Achsen aufweisen, und - Umverteilen des Gewichts auf die Radachsen, die ein System zur Achsaufhängung gemäß den erfassten Parametern aufweisen, - wobei das Steuern der Lenkung und Umverteilen des Gewichts automatisch basierend auf den erfassten Parametern durchgeführt wird.

5. Verfahren nach Anspruch 4, wobei die Parameter automatisch durch ein Befehlssystem erfasst werden.

6. Verfahren nach Anspruch 4 oder 5, wobei die Parameter manuell durch den Fahrer erfasst werden.

## Revendications

1. Système pour optimiser le pilotage de remorques (2) comprenant trois essieux (4a, 4b, 4c) de roue arrière ou plus et étant tractées par un véhicule (1), dans lequel - un ou plusieurs des essieux (4a, 4b, 4c) de roue les plus en arrière sont des essieux directeurs commandés, - tous les essieux (4a, 4b, 4c) de roue arrière ont le même système de suspension d'essieu et de commande du poids par essieu, dans lequel le poids total sur les essieux peut être redistribué, et dans lequel le système comprend en outre un système de contrôle pour détecter la vitesse, l'angle de braquage entre le véhicule (1) et la remorque (2), et les charges d'essieux, et commander les essieux directeurs et les essieux suspendus.

2. Système selon la revendication 1, dans lequel le ou les essieu(x) de roue étant des essieux directeurs commandés et le ou les essieux ayant un système de suspension d'essieu sont en arrière d'un point de virage théorique de la remorque.

3. Système selon la revendication 1, dans lequel le système comprend en outre un dispositif d'entrée manuelle par un conducteur.

4. Procédé pour optimiser le pilotage de remorques (2) comportant trois essieux (4a, 4b, 4c) de roue arrière ou plus et étant tractées par un véhicule (1), dans lequel la remorque comporte un système selon l'une quelconque des revendications 1 à 3, comprenant - la détection des paramètres de vitesse, de charge d'essieu et d'angle de braquage entre le véhicule (1) et la remorque (2), - la commande du pilotage d'un ou plusieurs des essieux de roue arrière comportant des essieux directeurs commandés, et - la redistribution du poids sur les essieux de roue comportant un système de suspension d'essieu, selon les paramètres détectés, - dans lequel la commande du pilotage et la redistribution du poids sont effectuées automatiquement sur la base des paramètres détectés.

5. Procédé selon la revendication 4, dans lequel les paramètres sont détectés automatiquement par un système de contrôle.

6. Procédé selon la revendication 4 ou 5, dans lequel les paramètres sont détectés manuellement
par le conducteur.
